# EUROPEAN PATENT APPLICATION

(11) **EP 3 457 284 A1**
(43) Date of publication of application: **20.03.2019**
(21) Application number: 17191084.7
(22) Date of filing: 14.09.2017
(51) Int. Cl.: G06F 11/26

(54) **TECHNIQUE FOR TESTING AN ELECTRONIC DEVICE**

(71) Applicant: Vestel Elektronik Sanayi ve Ticaret A.S., 45030 Manisa (TR)
(72) Inventor: Gebizli, Ceren Sahin, 45030 Manisa (TR); Öcal, Ömür, 45030 Manisa (TR)
(74) Representative: Schmidt, Steffen J.

(57) **Abstract**

The present disclosure relates to a simulator (100) for testing an electronic device (102), in particular a television. The simulator (100) is connectable to the electronic device (102) and comprises at least one processor and at least one memory, wherein the at least one memory contains instructions executable by the at least one processor such that the simulator (100) is operable to simulate at least one function of the electronic device (102), receive, from the electronic device (102), a result of performing the at least one function by the electronic device (102), and compare the result of performing the at least one function by the electronic device (102) with a result of simulating the at least one function by the simulator (100).

## Description

### Technical Field

The present disclosure generally relates to the field of device testing. More particularly, the present disclosure relates to a simulator for testing an electronic device, in particular a television, a method for testing an electronic device using a simulator as well as to a computer program for the executing the method.

### Background

In the field of consumer electronics, the quality of a product is an important criterion for consumers in the selection of a product and product tests are generally required to verify reliable operability of the product before bringing the product to the market. Consumers are typically interested in high end technology with a minimum number of faults as well as minimum costs, while increasingly shorter development cycles are expected at the same time. In particular, users become less tolerant to software based problems on their electronic devices.

In the product development cycle, product testing is an expensive and time consuming task. Tests may include certification, performance and functional tests which are preferably performed in parallel in order to be able to complete testing activities on time. To increase the reliability of a product, it is generally required to verify the various features of a product by detailed tests in an increasing number of test cycles. Such detailed testing, however, in particular of complex electronic devices, may take a large amount of time. In case of televisions (TVs), for example, testing may take up to approximately 35% of total product development time.

Moreover, for TVs, the common approach used nowadays in testing involves using real TV sets during the test phase. Manufacturing real TVs for testing is expensive and time consuming as well and test engineers may have to wait until test TVs are ready before starting their testing activities, potentially losing further time in the product development cycle.

It is thus an object of the present disclosure to provide a technique for testing an electronic device, in particular a TV, that avoids one or more of these, or other, problems.

### Summary

According to a first aspect, a simulator for testing an electronic device, in particular a TV, is provided. The simulator is connectable to the electronic device and comprises at least one processor and at least one memory, wherein the at least one memory contains instructions executable by the at least one processor such that the simulator is operable to simulate at least one function of the electronic device, receive, from the electronic device, a result of performing the at least one function by the electronic device, and compare the result of performing the at least one function by the electronic device with a result of simulating the at least one function by the simulator.

The simulator may also be denoted as a test device or system having a simulation function which may produce test results corresponding to the electronic device to be tested (i.e., the real electronic device). In a test procedure of the electronic device, the simulator may be said to act like the actual electronic device or resemble the behavior of the electronic device upon receiving the same input. The simulator may be used to compare actual functionality (e.g., at least one function) of the electronic device with corresponding functionality of the simulator, wherein the functionality of the simulator may be taken as the expected functionality. Depending on the result of the comparison, the simulator may decide on whether the electronic device passes or fails the test. More specifically, when a difference between the functionality of the electronic device and the corresponding functionality of the simulator is detected, the electronic device may not pass the test. Otherwise, when no differences are detected, the test of the electronic device may be determined to be successful.

The electronic device may be any electronic device to be tested and may in particular be a TV. The simulator may in this case act as a real TV in the above sense. It will be understood, however, that the testing principles disclosed herein may also be applied to any other consumer electronics device, such as set-top boxes, smartphones, laptops, refrigerators, cookers, dishwashers, washing machines, air conditioners, and the like. Both the simulator and the electronic device may have corresponding interfaces through which connectivity between the simulator and the electronic device may be established and through which the simulator and the electronic device may communicate for the purpose of performing a test. Connectivity may be established based on TCP/IP based network connections, USB based connections, serial connections according to the RS-232 standard, for example. In one variant, the simulator may be a standalone device. In another variant, the simulator may be provided in the form of a system which includes components that implement the required functions of the simulator. For example, the simulation function of the simulator may be implemented in a simulation component (e.g., a separate device) which may be external to the simulator device, i.e., the actual test device.

As said, the simulator may be used to compare the actual functionality of the electronic device with corresponding functionality of the simulator upon receiving the same input (e.g., a remote controller command, such as for a TV). The input may be provided to the electronic device and be processed by the simulation function of the simulator as part of a test procedure. In the test procedure, the result of simulating the at least one function by the simulator may correspond to an expected (i.e., a correct) result of performing the at least one function. In other words, the result produced by simulating the at least one function by the simulator may be taken as a benchmark for the result to be produced by performing the at least one function by the electronic device.

When the result produced by the electronic device is compared with the result produced by the simulator, the simulator may decide on a result of the test procedure. The at least one memory of the simulator may thus contain instructions executable by the at least one processor such that the simulator is operable to determine a positive test result when the result of performing the at least one function by the electronic device matches the result of simulating the at least one function by the simulator, and/or determine a negative test result when the result of performing the at least one function by the electronic device does not match the result of simulating the at least one function by the simulator.

The determined result of the test procedure may also be output by the simulator in order to inform a user, such as a test engineer who monitors the test procedure, for example. The at least one memory may thus further contain instructions executable by the at least one processor such that the simulator is operable to output a result of comparing the result of performing the at least one function by the electronic device with the result of simulating the at least one function by the simulator. The simulator may comprise a human machine interface for this purpose, such as a display or other visual and/or audible output unit (LEDs, speakers, etc.), for example. In case a test fails, a warning may be output to the user.

Simulating the at least one function of the electronic device may be performed by a simulation component of the simulator. To be able to simulate hardware and/or software functions of the electronic device, the simulation component may comprise one or more subcomponents configured to simulate respective hardware and/or software functions of the electronic device. In particular, the simulation component may comprise at least one of a user interface component configured to simulate at least one user interface function of the electronic device, a remote control component configured to simulate at least one remote control function of the electronic device, a power control component configured to simulate at least one power control function of the electronic device, an audio/video control component configured to simulate at least one audio/video control function of the electronic device, a communication component configured to simulate at least one communication function of the electronic device, an Internet component configured to simulate at least one Internet function of the electronic device, and a recording component configured to simulate at least one recording function of the electronic device.

The result produced by the simulator, i.e., the result of simulating the at least one function by the simulator, may correspond to expected data obtained by the simulation component (or by one or more of its subcomponents, respectively). In particular, the simulation component (or the respective subcomponents) may perform simulations that resemble behavior performed by the electronic device in order to produce the expected data as a benchmark result for the test procedure. The expected data may also be denoted as "reference data" or "nominal data". In some examples, the expected data may be determined based on (or may correspond to) predefined data stored in the simulation component.

The expected data may take many forms, which may differ depending on the subcomponent which returns the expected data. For the user interface component, the expected data may comprise information about at least one of a displayed user interface item and screen coordinates thereof expected in response to performing the at least one user interface function of the electronic device. For example, the user interface component may simulate a user interface function in response to a remote controller command, such as opening a particular menu item on a TV. The expected data may then comprise information about the opened menu item, including contents of screen areas, coordinates information thereof, input areas for entering values, etc.

For the remote control component, the expected data may comprise information about a changed state of the electronic device expected in response to performing the at least one remote control function of the electronic device. For example, the remote control component may simulate a remote control function in accordance with an inputted remote controller command (typically provided in the form of a hex code). The expected data may then comprise a state reflecting the result of the executed remote controller command, like "program up", "program down", "volume up", "volume down", "standby" in case of a TV, for example. Such data may be available for every hex command of the remote controller.

For the power control component, the expected data may comprise information about at least one of a voltage, a current and a time performance value expected in response to performing the at least one power control function of the electronic device. For example, the power control component may simulate a power control function in accordance with an inputted remote controller command, such as "power on" in case of a TV, for example. The expected data may then comprise an expected time which is required for starting the TV, such as 20 seconds or less, for example.

Examples of the expected data obtained by the remaining subcomponents of the simulation component may be provided in a similar manner. For the audio/video control component, the expected data may comprise information about at least one of an audio and a video signal expected in response to performing the at least one audio/video control function of the electronic device. For the communication component, the expected data may comprise information about traffic in accordance with a communication protocol at a communication interface of the electronic device (e.g., HDMI, SCART, USB, TCP/IP, YPbPr, VGA, etc. in case of a TV) expected in response to performing the at least one communication function of the electronic device. For the Internet component, the expected data may comprise information about Internet traffic (including information about IP protocols, for example) expected in response to performing the at least one Internet function of the electronic device. For the recording component, the expected data may comprise information about at least one of recording configuration information (e.g., including coordination information, for example) and recorded results expected in response to performing the at least one recording function of the electronic device.

While it is conceivable that a test procedure is triggered manually, e.g., by a test engineer who presses respective buttons on a remote controller to activate certain functions of the electronic device (e.g., a TV), performing the at least one function by the electronic device and simulating the at least one function by the simulator may also be triggered by executing a test script. The test script may be stored in the simulator, for example, and may be executed by the simulator. In one variant, execution of the test script may be started automatically when the simulator is connected to the electronic device, i.e., as soon as connectivity between the simulator and the electronic device is established. The test script may be written in a programming language like Python, for example. Executing a test script may comprise sending one or more commands (e.g., remote controller commands) to the electronic device in order to trigger execution of respective functions by the electronic device to be tested. The same commands may be provided to the simulation component of the simulator in order to trigger simulation of the respective functions by the simulation component at the same time. The results received from the electronic device and the simulation component may then be compared in order to verify the test results, as described above.

According to a second aspect, a method for testing an electronic device, in particular a TV, is provided. The method comprises simulating, by a simulator, at least one function of the electronic device, receiving, from the electronic device, a result of performing the at least one function by the electronic device, and comparing the result of performing the at least one function by the electronic device with a result of simulating the at least one function by the simulator.

The method may be performed by the simulator according to the first aspect. All apparatus features described herein with reference to the first aspect may thus also be embodied as functions, services or steps in the method of the second aspect.

According to a third aspect, a computer program product is provided. The computer program product comprises program code portions for performing the method of the second aspect when the computer program product is executed on a computing device. The computing device may be the simulator according to the first aspect. The computer program product may be stored on a computer readable recording medium, such as a semiconductor memory, DVD, CD-ROM, or the like.

All of the aspects described herein may be implemented by hardware circuitry and/or by software. Even if some of the aspects are described herein with respect to the simulator, these aspects may also be implemented as a method or as a computer program for performing or executing the method. Likewise, aspects described as or with reference to a method may be realized by suitable components in the simulator, or by means of the computer program.

### Brief Description of the Drawings

In the following, the present disclosure will further be described with reference to exemplary implementations illustrated in the figures, in which:
- Figure 1: schematically illustrates a modular composition of a simulator for testing a TV according to the present disclosure;
- Figure 2: schematically illustrates a hardware composition of the simulator of Figure 1; and
- Figure 3: schematically illustrates a flowchart of a method which may be performed by the simulator of Figure 1.

### Detailed Description

In the following description, for purposes of explanation and not limitation, specific details are set forth in order to provide a thorough understanding of the present disclosure. It will be apparent to one skilled in the art that the present disclosure may be practiced in other implementations that depart from these specific details.

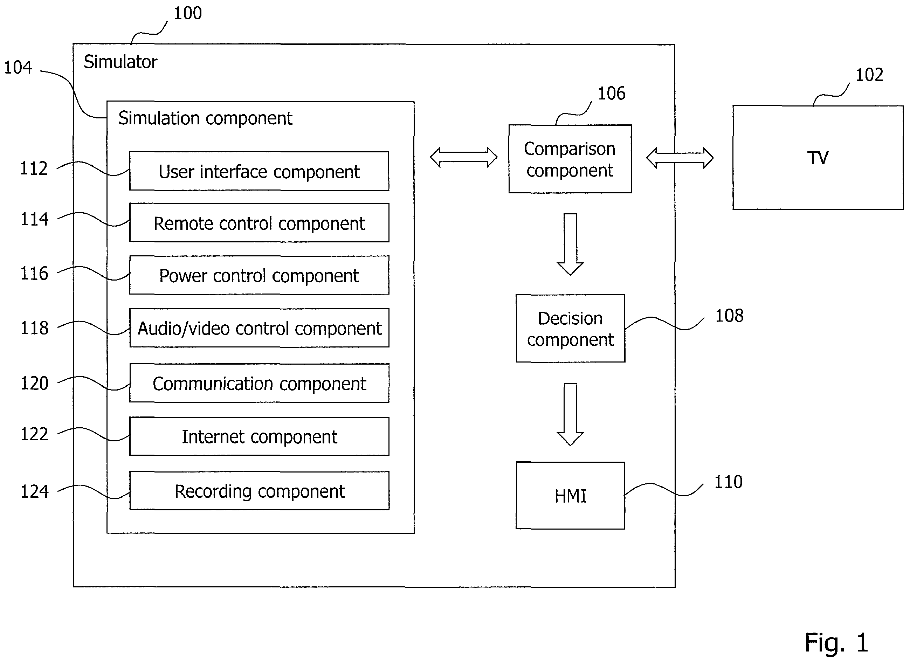

Figure 1 schematically illustrates an exemplary composition of a simulator 100 that can be used for testing an electronic device which, in the illustrated example, is given as a TV 102. It will be understood that the TV 102 is merely an exemplary electronic device and that the principles presented herein below may be practiced with other consumer electronics devices as well, such as set-top boxes, smartphones, laptops, refrigerators, cookers, dishwashers, washing machines, air conditioners, and the like. The simulator 100 comprises a simulation component 104 which is configured to simulate at least one hardware and/or software function of the TV 102. The simulator 100 may also be denoted as a test device or system, wherein the simulation component 104 may produce test results corresponding to the TV 102 (i.e., the real TV). In a test procedure, the simulation component 104 may be said to act like the actual TV 102 or resemble the behavior of the TV 102.

The simulation component 104 may be used to compare actual functionality of the TV 102 with corresponding functionality of the simulation component 104, wherein the functionality of the simulation component 104 may be taken as the expected functionality. For this purpose, the simulator 100 comprises a comparison component 106 which is configured to compare a result of performing the at least one function by the TV 102 with a result of simulating the at least one function by the simulation component 104. Upon providing an input (e.g., a remote controller command) to the TV 102 and the simulation component 104 (i.e., both the TV 102 and the simulation component 104 receive the same input), the TV 102 may perform the at least one function based on the received input and the simulation component 104 may simulate the at least one function based on the received input as well. The results of performing and simulating the at least one function are then passed to the comparison component 106 which may compare the results and provide a comparison result to a decision component 108. The decision component 108 is configured to decide on whether the TV 102 passes or fails the test depending on the comparison result. More specifically, when a difference between the functionality of the TV 102 and the corresponding functionality of the simulation component 104 is detected, the TV 102 may not pass the test. Otherwise, when no differences are detected, the test of the TV 102 may be determined to be successful. The result of the test procedure may then be output by the simulator 100 in order to inform a user, such as a test engineer who monitors the test procedure, for example. The simulator 100 comprises a human machine interface (HMI) 110 for this purpose, such as a display or other visual and/or audible output unit (LEDs, speakers, etc.), for example. In case the test fails, a warning may be output to the user.

For communication with the TV 102, the simulator 100 and the TV 102 may have corresponding interfaces through which connectivity between the simulator 100 and the TV 102 may be established and through which the simulator 100 and the TV 102 may communicate for the purpose of performing a test. Connectivity may be established based on TCP/IP-based network connections, USB based connections, serial connections according to the RS-232 standard, for example.

In the example illustrated in Figure 1, the simulator 100 is shown as a standalone device which comprises the simulation component 104 as a software and/or hardware component. It will be understood, however, that the simulator 100 could also be provided in the form of a system, wherein the simulation component 104 could be a separate device connected to the simulator 100 (i.e., the actual test device) in a similar manner as the TV 102.

As said, the simulator 100 may be used to compare the actual functionality of the TV 102 with corresponding functionality of the simulation component 104 upon receiving the same input. The input may be provided to the TV 102 and be processed by the simulation component 104 as part of a test procedure. In the test procedure, the result of simulating the at least one function by the simulation component may correspond to an expected (i.e., a correct) result of performing the at least one function. In other words, the results produced by simulating the at least one function by the simulation component 104 may be taken as a benchmark for the result to be produced by performing the at least one function by the TV 102.

To be able to simulate hardware and/or software functions of the TV 102, the simulation component 104 comprises one or more subcomponents configured to simulate one or more hardware and/or software functions of the TV 102. In particular, the simulation component 104 comprises a user interface component 112 configured to simulate at least one user interface function of the TV 102, a remote control component 114 configured to simulate at least one remote control function of the TV 102, a power control component 116 configured to simulate at least one power control function of the TV 102, an audio/video control component 118 configured to simulate at least one audio/video control function of the TV 102, a communication component 120 configured to simulate at least one communication function of the TV 102, an Internet component 122 configured to simulate at least one Internet function of the TV 102, and a recording component 124 configured to simulate at least one recording function of the TV 102.

The results produced by the simulation component 104 may correspond to expected data obtained by the simulation component 104 (or by one or more of its subcomponents, respectively). In particular, the simulation component 104 (or the respective subcomponents) may perform simulations that resemble behavior performed by the TV 102 in order to produce the expected data as a benchmark result for the test procedure. The expected data may also be denoted as "reference data" or "nominal data". In some examples, the expected data may be determined based on (or may correspond to) predefined data stored in the simulation component.

The expected data may take many forms, which may differ depending on the subcomponent which returns the expected data. For the user interface component 112, the expected data may comprise information about at least one of a displayed user interface item and screen coordinates thereof expected in response to performing the at least one user interface function of the TV 102. For example, the user interface component 112 may simulate a user interface function in response to a remote controller command, such as opening a particular menu item on the TV 102. The expected data may then comprise information about the opened menu item, including contents of screen areas, coordinates information thereof, input areas for entering values, etc.

For the remote control component 114, the expected data may comprise information about a changed state of the TV 102 expected in response to performing the at least one remote control function of the TV 102. For example, the remote control component 114 may simulate a remote control function in accordance with an inputted remote controller command (typically provided in the form of a hex code). The expected data may then comprise a state of the TV 102 reflecting the result of the executed remote controller command, like "program up", "program down", "volume up", "volume down", "standby", for example. Such data may be available for every hex command of the remote controller.

For the power control component 116, the expected data may comprise information about at least one of a voltage, a current and a time performance value expected in response to performing the at least one power control function of the TV 102. For example, the power control component 116 may simulate a power control function in accordance with an inputted mode controller command, such as "power on", for example. The expected data may then comprise an expected time which is required for starting the TV 102, such as 20 seconds or less, for example.

Examples of the expected data obtained by the remaining subcomponents of the simulation component may be provided in a similar manner. For the audio/video control component 118, the expected data may comprise information about at least one of an audio and a video signal expected in response to performing the at least one audio/video control function of the TV 102. For the communication component 120, the expected data may comprise information about traffic in accordance with a communication protocol at a communication interface (e.g., HDMI, SCART, USB, TCP/IP, YPbPr, VGA, etc.) of the TV 102 expected in response to performing the at least one communication function of the TV 102. For the Internet component 122, the expected data may comprise information about Internet traffic (including information about IP protocols, for example) expected in response to performing the at least one Internet function of the TV 102. For the recording component 124, the expected data may comprise information about at least one of recording configuration information (e.g., including coordination information, for example) and recorded results expected in response to performing the at least one recording function of the TV 102.

While it is conceivable that a test procedure is triggered manually, e.g., by a test engineer who presses respective buttons on a remote controller to activate certain functions of the TV 102, performing functions to be tested by the TV 102 and simulating corresponding functions by the simulation component 104 may also be triggered by executing a test script. The test script may be stored in the simulator 100 and may be executed by the simulator 100 accordingly. In one variant, execution of the test script may be started automatically when the simulator 100 is connected to the TV 102, i.e., as soon as e.g. a cable is plugged into the interfaces of the simulator 100 and the TV 102 to establish connectivity therebetween. The test script may be written in a programming language like Python, for example. Executing a test script may comprise sending one or more commands (e.g., remote controller commands) to the TV 102 in order to trigger execution of respective functions by the TV 102. The same commands may be provided to the simulation component 104 in order to trigger simulation of the respective functions by the simulation component 104 at the same time. The results received from the TV 102 and the simulation component 104 may then be compared in order to verify the test results.

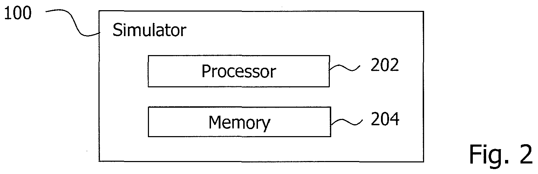

Figure 2 illustrates an exemplary hardware composition of the simulator 100. The simulator 100 comprises at least one processor 202 and at least one memory 204, wherein the at least one memory 204 contains instructions executable by the at least one processor 202 such that the simulator 100 is operable to carry out the functions, services or steps described herein with regard to the simulator. It will be understood that the hardware composition of the simulator 100 may comprise further hardware components required to form a standalone device. For example, the simulator 100 may comprise a power supply unit as well as an interface for connectivity to the TV 102. These components are not shown in Figure 2 for the sake of simplicity.

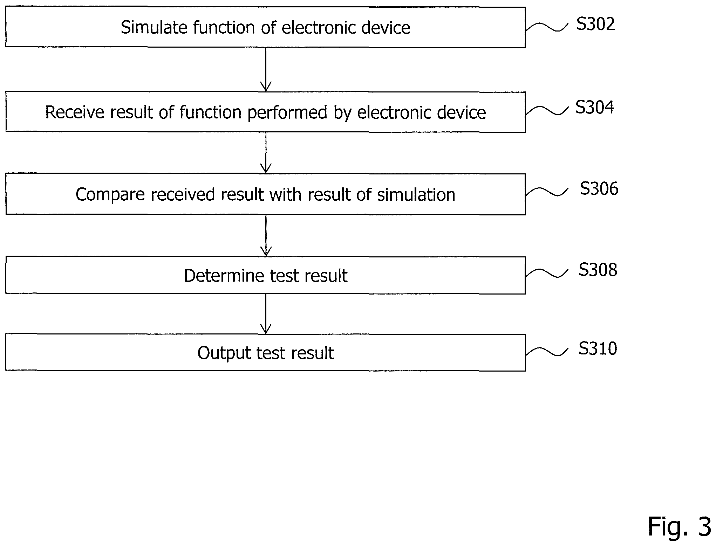

Figure 3 schematically illustrates a flowchart of a method for testing an electronic device, i.e., in the present example the TV 102, which may be performed by the simulator 100. The method begins at step S302, at which the simulation component 104 simulates at least one function of the TV 102. In step S304, the simulator 100 receives, from the TV 102, a result of performing the at least one function by the TV 102 and, in step S306, the comparison component 106 of the simulator 100 compares the result of performing the at least one function by the TV 102 with a result of simulating the at least one function by the simulation component 104. Thereafter, in step S308, the decision component 108 of the simulator 100 may determine a positive test result when the result of performing the at least one function by the TV 102 matches the result of simulating the at least one function by the simulation component 104, and/or determine a negative test result when the result of performing the at least one function by the TV 102 does not match the result of simulating the at least one function by the simulation component 104. Finally, in step S310, the HMI 110 of the simulator 100 may output the determined test result (e.g., either a positive or negative test result) to inform a user, such as a test engineer who monitors the test procedure, for example.

With reference to the user interface component 112 and the power control component 116, for example, the method according to Figure 3 may include the following particular steps. Upon inputting a remote control command for opening a menu item to both the TV 102 and the simulation component 104, the expected data determined by the user interface component 112 may comprise information about the opened menu item, including contents of screen areas, coordinates information thereof, input areas for entering values, and the like. This data is then compared to the actual data produced by the TV 102. In case of a match of the data, a positive test result is output and, in case of a mismatch of the data, a negative result is output by the simulator device 100. Similarly, upon inputting a "power on" remote control command for waking up the TV 100 from a standby mode to both the TV 102 and the simulation component 104, the expected data determined by the power control component 116 may comprise an expected time required for starting the TV 102, e.g., 20 seconds or less. This data is then compared to the actual data produced by the TV 102 and, again, in case of a match of the data, a positive test result is output and, in case of a mismatch of the data, a negative result is output by the simulator device 100.

As has become apparent from the above, the simulator presented herein may be used as a test device or system in a test procedure for a real electronic device, such as a TV. Through the capability of simulating various hardware and/or software functions of the electronic device, tests regarding almost every aspect of the electronic device may be performed in an efficient and automated manner using the simulator. As the simulator may produce test results corresponding to the electronic device (and may therefore be said to act like the real electronic device), it is possible to use the simulator instead of a real electronic device as a benchmark device in a test procedure. In case of TVs, expensive and time consuming manufacturing of real TVs for testing can thus be avoided and test engineers do not have to wait until test TVs are available before starting their testing activities. In particular, the simulator may be configurable to perform simulations and tests for different electronic device types or models (e.g., TV models) so that the same simulator may be used for the testing of different types or models of an electronic device.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A simulator (100) for testing an electronic device (102), in particular a television, the simulator (100) being connectable to the electronic device (102) and comprising at least one processor (202) and at least one memory (204), the at least one memory (204) containing instructions executable by the at least one processor (202) such that the simulator (100) is operable to:
simulate (S302) at least one function of the electronic device (102);
receive (S304), from the electronic device (102), a result of performing the at least one function by the electronic device (102); and
compare (S306) the result of performing the at least one function by the electronic device (102) with a result of simulating the at least one function by the simulator (100).

2. The simulator (100) of claim 1, wherein the result of simulating the at least one function by the simulator (100) corresponds to an expected result of performing the at least one function.

3. The simulator (100) of claim 1 or 2, wherein the at least one memory (204) further contains instructions executable by the at least one processor (202) such that the simulator (100) is operable to:
determining (S308) a positive test result when the result of performing the at least one function by the electronic device (102) matches the result of simulating the at least one function by the simulator (100), and/or
determining (S308) a negative test result when the result of performing the at least one function by the electronic device (102) does not match the result of simulating the at least one function by the simulator (100).

4. The simulator (100) of any one of claims 1 to 3, wherein the at least one memory (204) further contains instructions executable by the at least one processor (202) such that the simulator (100) is operable to:
output (S310) a result of comparing the result of performing the at least one function by the electronic device (102) with the result of simulating the at least one function by the simulator (100).

5. The simulator (100) of any one of claims 1 to 4, wherein simulating the at least one function of the electronic device (102) is performed by a simulation component (104) of the simulator (100), the simulation component (104) comprising at least one of:
a user interface component (112) configured to simulate at least one user interface function of the electronic device (102),
a remote control component (114) configured to simulate at least one remote control function of the electronic device (102),
a power control component (116) configured to simulate at least one power control function of the electronic device (102),
an audio/video control component (118) configured to simulate at least one audio/video control function of the electronic device (102),
a communication component (120) configured to simulate at least one communication function of the electronic device (102),
an Internet component (122) configured to simulate at least one Internet function of the electronic device (102), and
a recording component (124) configured to simulate at least one recording function of the electronic device (102).

6. The simulator (100) of claim 5, wherein the result of simulating the at least one function by the simulator (100) corresponds to expected data obtained by the simulation component (104).

7. The simulator (100) of claim 6, wherein the expected data comprises:
for the user interface component (112), information about at least one of a displayed user interface item and screen coordinates thereof expected in response to performing the at least one user interface function of the electronic device (102), and/or
for the remote control component (114), information about a changed state of the electronic device (102) expected in response to performing the at least one remote control function of the electronic device (102), and/or
for the power control component (116), information about at least one of a voltage, a current and a time performance value expected in response to performing the at least one power control function of the electronic device (102), and/or
for the audio/video control component (118), information about at least one of an audio and a video signal expected in response to performing the at least one audio/video control function of the electronic device (102), and/or
for the communication component (120), information about traffic in accordance with a communication protocol at a communication interface of the electronic device (102) expected in response to performing the at least one communication function of the electronic device (102), and/or
for the Internet component (122), information about Internet traffic expected in response to performing the at least one Internet function of the electronic device (102), and/or
for the recording component (124), information about at least one of recording configuration information and recorded results expected in response to performing the at least one recording function of the electronic device (102).

8. The simulator (100) of any one of claims 1 to 7, wherein performing the at least one function by the electronic device (102) and simulating the at least one function by the simulator (100) is triggered by executing a test script.

9. The simulator (100) of claim 8, wherein the test script is executed by the simulator (100).

10. The simulator (100) of claims 8 or 9, wherein execution of the test script is started automatically when the simulator (100) is connected to the electronic device (102).

11. A method for testing an electronic device (102), in particular a television, comprising:
simulating (S302), by a simulator (100), at least one function of the electronic device (102);
receiving (S304), from the electronic device (102), a result of performing the at least one function by the electronic device (102); and
comparing (S306) the result of performing the at least one function by the electronic device (102) with a result of simulating the at least one function by the simulator (100).

12. A computer program product comprising program code portions for carrying out the method of claim 11 when the computer program product is executed on a computing device.

13. A computer readable recording medium storing a computer program product according to claim 12.

## Amended claims

### Amended claims in accordance with Rule 137(2) EPC.

1. A simulator device (100) for testing an electronic device (102), in particular a television, the simulator device (100) being connectable to the electronic device (102) and comprising at least one processor (202) and at least one memory (204), the at least one memory (204) containing instructions executable by the at least one processor (202) such that the simulator device (100) is operable to:
simulate (S302) at least one function of the electronic device (102);
receive (S304), from the electronic device (102), a result of performing the at least one function by the electronic device (102); and
compare (S306) the result of performing the at least one function by the electronic device (102) with a result of simulating the at least one function by the simulator device (100).

2. The simulator device (100) of claim 1, wherein the result of simulating the at least one function by the simulator device (100) corresponds to an expected result of performing the at least one function.

3. The simulator device (100) of claim 1 or 2, wherein the at least one memory (204) further contains instructions executable by the at least one processor (202) such that the simulator device (100) is operable to:
determining (S308) a positive test result when the result of performing the at least one function by the electronic device (102) matches the result of simulating the at least one function by the simulator device (100), and/or
determining (S308) a negative test result when the result of performing the at least one function by the electronic device (102) does not match the result of simulating the at least one function by the simulator device (100).

4. The simulator device (100) of any one of claims 1 to 3, wherein the at least one memory (204) further contains instructions executable by the at least one processor (202) such that the simulator device (100) is operable to:
output (S310) a result of comparing the result of performing the at least one function by the electronic device (102) with the result of simulating the at least one function by the simulator device (100).

5. The simulator device (100) of any one of claims 1 to 4, wherein simulating the at least one function of the electronic device (102) is performed by a simulation component (104) of the simulator device (100), the simulation component (104) comprising at least one of:
a user interface component (112) configured to simulate at least one user interface function of the electronic device (102),
a remote control component (114) configured to simulate at least one remote control function of the electronic device (102),
a power control component (116) configured to simulate at least one power control function of the electronic device (102),
an audio/video control component (118) configured to simulate at least one audio/video control function of the electronic device (102),
a communication component (120) configured to simulate at least one communication function of the electronic device (102),
an Internet component (122) configured to simulate at least one Internet function of the electronic device (102), and
a recording component (124) configured to simulate at least one recording function of the electronic device (102).

6. The simulator device (100) of claim 5, wherein the result of simulating the at least one function by the simulator device (100) corresponds to expected data obtained by the simulation component (104).

7. The simulator device (100) of claim 6, wherein the expected data comprises:
for the user interface component (112), information about at least one of a displayed user interface item and screen coordinates thereof expected in response to performing the at least one user interface function of the electronic device (102), and/or
for the remote control component (114), information about a changed state of the electronic device (102) expected in response to performing the at least one remote control function of the electronic device (102), and/or
for the power control component (116), information about at least one of a voltage, a current and a time performance value expected in response to performing the at least one power control function of the electronic device (102), and/or
for the audio/video control component (118), information about at least one of an audio and a video signal expected in response to performing the at least one audio/video control function of the electronic device (102), and/or
for the communication component (120), information about traffic in accordance with a communication protocol at a communication interface of the electronic device (102) expected in response to performing the at least one communication function of the electronic device (102), and/or
for the Internet component (122), information about Internet traffic expected in response to performing the at least one Internet function of the electronic device (102), and/or
for the recording component (124), information about at least one of recording configuration information and recorded results expected in response to performing the at least one recording function of the electronic device (102).

8. The simulator device (100) of any one of claims 1 to 7, wherein performing the at least one function by the electronic device (102) and simulating the at least one function by the simulator device (100) is triggered by executing a test script.

9. The simulator device (100) of claim 8, wherein the test script is executed by the simulator (100).

10. The simulator device (100) of claims 8 or 9, wherein execution of the test script is started automatically when the simulator device (100) is connected to the electronic device (102).

11. A method for testing an electronic device (102), in particular a television, comprising:
simulating (S302), by a simulator device (100), at least one function of the electronic device (102);
receiving (S304), from the electronic device (102), a result of performing the at least one function by the electronic device (102); and
comparing (S306) the result of performing the at least one function by the electronic device (102) with a result of simulating the at least one function by the simulator device (100).

12. A computer program product comprising program code portions for carrying out the method of claim 11 when the computer program product is executed on a computing device.

13. A computer readable recording medium storing a computer program product according to claim 12.
